# EUROPÄISCHE PATENTSCHRIFT

(11) **EP 3 415 345 B1**
(45) Veröffentlichungstag und Bekanntmachung des Hinweises auf die Patenterteilung: **07.06.2023**
(21) Anmeldenummer: 18177369.8
(22) Anmeldetag: 12.06.2018
(51) Int. Cl.: B60C 23/00, A01M 7/00

(54) **LANDWIRTSCHAFTLICHE MASCHINE MIT REIFENDRUCKREGELANLAGE UND VERFAHREN ZUR REIFENDRUCKREGELUNG**
AGRICULTURAL MACHINE WITH TYRE PRESSURE CONTROL DEVICE AND METHOD FOR CONTROLLING TYRE PRESSURE
MACHINE AGRICOLE DOTÉE DE L'INSTALLATION DE RÉGLAGE DE PRESSION DES PNEUMATIQUES ET PROCÉDÉ DE RÉGLAGE DE PRESSION DES PNEUMATIQUES

(30) Priorität: 14.06.2017 DE 102017210073
(43) Veröffentlichungstag der Anmeldung: 19.12.2018
(73) Patentinhaber: HORSCH LEEB Application Systems GmbH, 94405 Landau an der Isar (DE)
(72) Erfinder: ZINK, Florian, 94562 Oberpöring (DE)
(74) Vertreter: Benninger, Johannes

(56) Entgegenhaltungen:
- EP-A1- 2 583 842
- EP-A1- 2 591 671
- EP-A1- 3 159 191
- EP-A2- 2 213 164
- DE-A1- 10 329 937
- DE-A1-102011 085 040
- US-A1- 2017 120 698

## Beschreibung

Die vorliegende Erfindung betrifft eine landwirtschaftliche Maschine mit einer Reifendruckregelanlage gemäß dem Oberbegriff des Patentanspruches 1. Die Erfindung betrifft zudem ein Verfahren zur Reifendruckregelung mit den Merkmalen des Oberbegriffs des unabhängigen Anspruchs 7.

In der Landwirtschaft werden verschiedenste Maschinen eingesetzt, um eine gewünschte Arbeit zu verrichten, wobei diese Maschinen sowohl als selbstfahrende Maschinen als auch als mittels einer Zugmaschine gezogene Maschinen ausgeführt sein können. So sind bspw. landwirtschaftliche Feldspritzen bekannt, welche sowohl als selbstfahrende als auch als gezogene Feldspritzen ausgeführt sein können. Mit diesen Feldspritzen kann jeweils eine gewünschte Pflanzenschutzflüssigkeit über einer Ackerfläche ausgebracht werden, welche Flüssigkeit wiederum in einem an der Feldspritze vorhandenen Vorratsbehälter mitgeführt wird.

Zur leichteren Fortbewegung besitzen die landwirtschaftlichen Maschinen luftdruckgefüllte Räder, wobei die landwirtschaftlichen Maschinen hinsichtlich ihres Betreibens auf einem zu bearbeitenden Feld oder bei einer Fahrt auf öffentlichen Straßen unterschiedlichen Restriktionen unterworfen sind. Bei einer Fahrt auf dem Feld wird bspw. angestrebt, die durch die landwirtschaftliche Maschine hervorgerufene Bodenverdichtung durch die an der Maschine befindliche Bereifung möglichst gering zu halten, was bspw. durch eine Vergrößerung der Reifenaufstandsfläche bei gleichzeitiger Verringerung des Reifenluftdrucks erreicht wird. Bei einer Fahrt auf öffentlichen Straßen muss jedoch ein ausreichender Luftdruck in der Bereifung vorhanden sein, um u.a. eine ausreichende Fahrstabilität zu gewährleisten, was bspw. durch einen erhöhten Reifenluftdruck und somit einer geringeren Reifenaufstandsfläche erreichbar ist.

Neben dem in der Bereifung vorhandenen Reifenluftdruck ist jedoch zur Definition der Reifenaufstandsfläche auch noch das jeweilige Gewicht der Maschine mit zu berücksichtigen, wobei dieses je nach Befüllung des Vorratsbehälters entsprechend variieren kann. Systeme zur Beeinflussung bzw. zur Anpassung des jeweiligen Reifenluftdrucks sind aus dem Stand der Technik bereits bekannt und werden als Reifendruckregelanlage bezeichnet, auch wenn es sich bei vielen Systemen nicht um eine Regelung im engeren Sinne handelt, sondern um eine reine Reifendrucksteuerung, die nach manuellen Vorgaben den Reifenluftdruck variieren kann.

Eine derartige Reifendruckregelanlage geht bspw. aus der US 2016 0 139 001 A1 bereits hervor. Hierin ist ein System beschrieben, bei welchem eine kontinuierliche Anpassung des Reifenluftdrucks erfolgt, wobei hierfür jeweils das Walken des Reifens bzw. ein Abstand zwischen der Felge des Reifens und der Bodenoberfläche sensorisch erfasst wird. Auf Basis des sensorisch erfassten Walkens bzw. Abstands wird anschließend mittels eines Luftdruckreglers der Reifenluftdruck entsprechend an einen gewünschten Wert angepasst. Um diese Anpassung noch weiter zu verbessern, können darüber hinaus an der landwirtschaftlichen Feldspritze noch weitere Sensoren angebracht sein. So kann bspw. ein Füllstand des Vorratsbehälters oder eine Fahrgeschwindigkeit zusätzlich mit erfasst werden. Zwar wird mit einem derartigen System der jeweils gewünschte Reifenluftdruck kontinuierlich an die jeweiligen Umgebungsbedingungen angepasst, nur ist die sensorische Ermittlung des Walkens auch fehlerbehaftet, da dieses Walken nicht nur vom Füllstand des Vorratsbehälters beeinflusst werden kann, sondern auch von den Bodeneigenschaften der Ackerfläche oder von in der Ackerfläche vorhandenen Furchen oder Unebenheiten, wodurch es wiederum auch mit einem derartigen System zu fehlerhaften Reifenluftdrücken kommen kann. Des Weiteren kann sich eine kontinuierliche Veränderung der Reifenluftdrücke bei Straßenfahrten wiederum negativ auf die Fahreigenschaften auswirken. Auch ist eine Anpassung des jeweils erforderlichen Reifenluftdrucks an verschiedene Reifen nicht vorgesehen, d.h. so können verschiedene Reifen verschieden Walken bzw. einen unterschiedlichen Abstand zu einer Bodenoberfläche ausweisen, jedoch dennoch eine ausreichende Fahrstabilität erreichen.

Durch die US 2017/0120698 A1 ist eine Maschine offenbart, welche mit einer Reifendruckregelanlage zur automatischen Einstellung des Luftdrucks ausgestattet ist. Gemäß einem Ausführungsbeispiel dient die Reifendruckregelanlage insbesondere dazu, den Reifenluftdruck an den jeweiligen Fahrmodus anzupassen, da bei einem Straßenfahrmodus oder bei einem Feldbearbeitungsmodus unterschiedliche Anforderungen an die Maschine bestehen. Insbesondere wird der Reifenluftdruck bei einem Wechsel von einer Feldbearbeitungsfahrt in eine Transportfahrt erhöht, während der Reifenluftdruck bei einem Wechsel von einer Transportfahrt in eine Feldbearbeitungsfahrt reduziert wird. Zwar lässt sich auch mit diesem System ein verbesserter Reifenluftdruck erzielen, jedoch ist dieses System ebenfalls nur bedingt bei sog. Feldspritzen einsetzbar, da in derartigen Feldspritzen jeweils Flüssigkeiten transportiert werden, welche dem sog. Sloshing Effekt unterliegen, und da jeweils andere Anforderungen an die Maschine als bei Bodenbearbeitungsmaschinen vorliegen.

Durch die DE 10 2008 041 159 A1 ist eine landwirtschaftliche Feldspritze offenbart, bei welcher in Abhängigkeit von der Fahrgeschwindigkeit die Pumpe zum Fördern von Spritzflüssigkeit einstellbar ist. Der Luftdruck in den Reifen bleibt hingegen unverändert, so dass sich die Reifen der Maschine nicht an den jeweiligen Fahrmodus, insbesondere an eine Straßen- oder Feldfahrt, und der sich daraus ergebenden Bedingungen anpassen lassen.

Durch die DE 10 2011 085 040 A1 ist ein landwirtschaftliches Fahrzeug mit einer Anhängevorrichtung beschrieben. Das Fahrzeug ist mit einer elektro-pneumatischen Reifendruckregelanlage, insbesondere mit einer elektronischen Steuereinheit, ausgestattet, um den Reifenluftdruck für verschiedene Betriebszustände automatisch anzupassen. Insbesondere jedoch wird der Reifenluftdruck in Abhängigkeit von der Zugkraft und/oder der Arbeitstiefe und/oder vom Schlupf eingestellt. Anhand der von Sensoren ermittelten oder durch den Bediener eingegebenen Werte für Zugkraft, Arbeitstiefe und Schlupf, kann durch die elektronische Steuereinheit bereitgestellte Regelung der Schlupf oder die Zugkraft bzw. die Arbeitstiefe konstant gehalten werden. Dazu kann der Reifendruck derart verändert werden, dass der sich einstellende Schlupf unverändert bleibt und die von dem Fahrzeug aufbringbare bzw. aufzubringende Zugkraft oder Arbeitstiefe des Anbaugeräts bedarfsgerecht erhöht bzw. reduziert werden kann. Eine derartige Reifendruckregelanlage lässt sich jedoch nicht ohne Weiteres auf eine Feldspritze übertragen und/oder anwenden, da bei Feldspritzen die Arbeitstiefe und/oder Schlupf eine eher untergeordnete bis überhaupt keine Rolle spielen. Auch sind bei Feldspritzen andere Umwelteinflüsse und/oder Parameter relevant, als bei einer Bodenbearbeitungsmaschine.

Die DE 10 2015 220 743 A1 beschreibt ein System zur Beeinflussung einer Fahrzeuglage, insbesondere beim Befahren eines geneigten Untergrunds. Das Fahrzeug ist mit einer Sensoreinrichtung ausgestattet, welche eine Querneigung des Fahrzeugaufbaus gegenüber einem befahrenen und/oder zu befahrenden Untergrund ermittelt und aufgrund dessen eine Querneigungsgröße bereitstellt, die einer Kontrolleinheit zugeführt wird. Die Kontrolleinheit kann den für die linken und rechten Räder vorgebbaren Reifenfülldruck durch Ansteuerung der Reifenfülldruckanlage nach Maßgabe der Querneigungsgröße anpassen, so dass der Fahrzeugaufbau im Sinne einer Verringerung der ermittelten Querneigung gegenüber dem befahrenen und/oder zu befahrenden Untergrund verkippt wird. Anhand von Querneigungen des Fahrzeuges kann jedoch nicht zuverlässig darauf geschlossen werden, ob sich das Fahrzeug in einer Straßenfahrt oder in einer Feldbearbeitungsfahrt befindet, da Querneigungen sowohl in der Straßenfahrt als auch in der Feldbearbeitungsfahrt auftreten können. Insofern eignet sich die beschriebene Steuerung nicht, um den Reifenluftdruck in Abhängigkeit vom jeweiligen Fahrmodus, insbesondere von der Feldbearbeitungsfahrt oder der Straßenfahrt einzustellen.

Darüber hinaus werden Reifendruckregelanlagen bzw. Reifendruckverstellanlagen mitunter auch in sog. Erntemaschinen eingesetzt, in welchen je nach Füllstand eines Vorratsbehälters der jeweilige Reifenluftdruck entsprechend angepasst wird. Eine Erntemaschine mit Reifendruckregelanlage geht bspw. aus der DE 10 2011 001 858 A1 bereits hervor. An der Erntemaschine sind verschiedenste Sensoren angebracht, mittels welchen jeweils eine Befahrbarkeit einer Ackerfläche ermittelt wird. In Abhängigkeit der mittels der Sensoren ermittelten Befahrbarkeit wird unter anderem der Reifenluftdruck in den Rädern der Erntemaschine angepasst. Zwar lässt sich auch mit einem derartigen System ein verbesserter Reifenluftdruck erzielen, nur ist dieses System nur bedingt bei sog. Feldspritzen einzusetzen. Da in derartigen Feldspritzen jeweils Flüssigkeiten transportiert werden, welche dem sog. Sloshing Effekt unterliegen, sind bei derartigen landwirtschaftlichen Maschinen auch noch weitere Maschinenparameter für eine ausreichende Fahrstabilität mit zu berücksichtigen.

Die DE 103 29 937 A1 beschreibt eine Reifenregeldruckanlage zur automatischen Druckregelung von gasgefüllten Radreifen an einer selbstfahrenden Erntemaschine. Die Reifendruckregelanlage ist mit einer Steuervorrichtung ausgestattet und regelt den Reifendruck der Radreifen in Abhängigkeit von einer Maschinenmasse. Die Maschinenmasse wird mittels eines Sensors erfasst, welcher Sensor vorzugsweise als Füllstandssensor zur Erfassung des Füllstandes des Behälters und/oder als Ertragssensor zur Erfassung der Befüllung des Behälters pro Zeiteinheit in einem Kornelevator ausgebildet ist. In Abhängigkeit der vom Sensor erfassten Werte zur Maschinenmasse wird die Maschinenmasse anteilig auf jedes Rad berechnet und dessen Reifenluftdruck eingestellt. Auch bei diesem System wird zwar der Reifendruck automatisch angepasst, jedoch ist dieses System nur bedingt bei sog. Feldspritzen einsetzbar. Da in derartigen Feldspritzen jeweils Flüssigkeiten transportiert werden, welche dem sog. Sloshing Effekt unterliegen, sind bei derartigen landwirtschaftlichen Maschinen auch noch weitere Maschinenparameter für eine ausreichende Fahrstabilität mit zu berücksichtigen.

Die EP 2 583 842 A1 zeigt einen Traktor mit Feldspritze und Reifendruckregelanlage, welche einen unterscheidlichen Reifendruck für einen Strassen- und einen Feldfahrmodus auf Basis der jeweiligen Geschwindigkeit einstellt.

Der Erfindung liegt daher die Aufgabe zugrunde, eine landwirtschaftliche Maschine mit einer Reifendruckregelanlage zu schaffen, welche die Nachteile der aus dem Stand der Technik bekannten Systeme vermeidet und eine verbesserte Anpassung des Reifenluftdrucks bzw. der Fahrstabilität gewährleistet. Zudem soll ein Verfahren zur Reifenregeldruckanlage bei einer landwirtschaftlichen Maschine zur Verfügung gestellt werden, welches eine verbesserte Anpassung des Reifenluftdrucks bzw. der Fahrstabilität gewährleistet.

Diese Aufgabe der Erfindung wird erfindungsgemäß durch die Merkmale des unabhängigen Anspruchs 1 sowie durch die Merkmale des unabhängigen Anspruchs 7 gelöst. Vorteilhafte Weiterbildungen sind in den abhängigen Ansprüchen und der Beschreibung angegeben.

Die erfindungsgemäße Aufgabe wird durch eine landwirtschaftliche Maschine mit einer Reifendruckregelanlage gelöst, wobei es sich bei der landwirtschaftlichen Maschine insbesondere um eine Arbeitsmaschine bzw. um eine mittels eines Zugfahrzeuges gezogene oder eine selbstfahrende Feldspritze handeln kann, mittels welcher Feldspritze jeweils verschiedenste Pflanzenschutzmittel auf einer Ackerfläche verteilt werden können. Die Pflanzenschutzmittel liegen zumeist in flüssiger Form vor. Die Feldspritze umfasst in der Ausführungsvariante als gezogene Feldspritze wenigstens zwei sowie in der Ausführungsvariante als selbstfahrende Feldspritze wenigstens drei bzw. vier jeweils mit einen Luftdruck beaufschlagte Räder. Zur Variation des in den Rädern vorhandenen Reifenluftdrucks ist diesen wenigstens ein gemeinsamer oder jeweils zwei eine Achse bildenden Räder oder jedem Rad ein Luftdruckregler zugeordnet, wobei die, zumindest jedoch einzelne, Räder auch lenkbar sein können. Zum Mitführen und Bereitstellen des jeweiligen Pflanzenschutzmittels bzw. des jeweiligen Verteilguts besitzt die landwirtschaftliche Maschine zusätzlich wenigstens einen Vorratsbehälter, wobei wiederum der Füllstand in diesem mittels wenigstens eines Überwachungselementes ermittelt bzw. erfasst wird. Des Weiteren besitzt die landwirtschaftliche Maschine wenigstens eine Rechnereinheit mit der jeweils der Luftdruckregler sowie die Komponenten der Maschine angesteuert sowie die mittels des wenigstens einem Überwachungselements erfassten Daten verarbeitet werden. Zur Verteilung des jeweiligen Pflanzenschutzmittels ist an der landwirtschaftlichen Maschine ein Spritz- bzw. Verteilergestänge angebracht, welches zwischen einer ausgeklappten Arbeitsposition und einer eingeklappten Transportposition verschwenkbar ist. So kann dieses in einer Arbeitsposition eine Arbeitsbreite von bis zu 36 Metern oder mehr aufweisen und sich quer zur Fahrtrichtung erstrecken und in Transportposition auf eine für eine Straßenfahrt erforderliche Breite von bspw. drei Metern zusammengefaltet bzw. verschwenkt werden. Auch können dem Spritz- bzw. Verteilergestänge Stellglieder zugeordnet sein, mittels welchen jeweils der Abstand zwischen dem Gestänge und Boden eingestellt und/oder variiert werden kann. Am Verteilergestänge sind in Abständen von bspw. 25 cm oder 50 cm zueinander jeweils Spritzdüsen angebracht, welche zur Verteilung der Pflanzenschutzflüssigkeit jeweils einen zum Pflanzenbestand hingerichteten Sprühkegel erzeugen.

Um eine auch bei sich verändernden Bodenbedingungen exakte Regelung des jeweiligen Reifenluftdrucks zu erreichen, bei welcher zudem bei einer Straßenfahrt keine negativen Fahreigenschaften auftreten sowie um den Sloshing Effekt möglichst zu vermeiden sowie zusätzlich einen möglichst geringen Reifenverschleiß zu erreichen, ist vorgesehen, dass die Ansteuerung des Luftdruckreglers in Abhängigkeit des Fahrmodus der landwirtschaftlichen Maschine geregelt wird, wobei in einem Straßenfahrmodus ein erster Druckbereich aktiv ist und wobei in einem Arbeitsmodus ein zweiter Druckbereich aktiv ist. Somit können die jeweiligen Druckbereiche der Räder jeweils auf die jeweiligen Erfordernisse sowie die Regelung des Reifenluftdrucks jeweils an die aktuellen Fahreigenschaften bzw. Fahrbedingungen angepasst werden. So kann vorgesehen sein, dass in einem Straßenfahrmodus bspw. nur eine einmalige Regelung erfolgt, so dass während der Straßenfahrt keine weiteren Änderungen mehr am Reifenluftdruck vorgenommen werden, sowie dass in einem Arbeitsmodus, in welchem sich in der Regel der Füllstand des Vorratsbehälters kontinuierlich verändert, auch der Reifenluftdruck kontinuierlich verändert wird.

Eine derartige Fahrmodus abhängige Regelung hat zudem den Vorteil, dass die Aspekte der sog. funktionalen Sicherheit während einer Straßenfahrt bzw. im Straßenfahrmodus nicht betrachtet werden müssen, da durch die bspw. einmalige Regelung keine gefährlichen Fahrtzustände während einer Straßenfahrt betrachtet werden müssen, was mit den aus dem Stand der Technik bekannten Reifendruckregelanlagen bislang nicht der Fall war, in denen auch während der Straßenfahrt eine kontinuierliche Regelung des Reifenluftdrucks erfolgt ist.

Der Straßenfahrmodus kann bspw. durch ein eingeklapptes Verteilergestänge definiert sein. Auch könnte eine starr gestellte Lenkung zur Definition des Straßenfahrmodus verwendet werden. Auch eine Fahrgeschwindigkeit der landwirtschaftlichen Maschine könnte den Straßenfahrmodus definieren, so dass bei einer definierten Geschwindigkeit, welche bspw. größer als 20 km/h ist, der Straßenfahrmodus aktiviert wird. Auch könnte der Straßenfahrmodus durch eine Bedienperson manuell definiert bzw. vorgewählt werden.

Umgekehrt wie im Straßenfahrmodus kann der Arbeitsmodus unter anderem durch ein ausgeklapptes Verteilergestänge und/oder durch eine aktive Lenkung definiert sein. Auch kann hier wiederum die Geschwindigkeit den Arbeitsmodus definieren, wobei diese hier kleiner ist als im Straßenfahrmodus und bspw. kleiner oder gleich 20 km/h ist. Auch kann der Arbeitsmodus wiederum manuell durch eine Bedienperson entsprechend vorgewählt werden.

Somit können generell die verschiedensten Arbeitselemente oder Parameter der landwirtschaftlichen Maschine verwendet werden, mittels denen zwischen einem Straßenfahrmodus und einem Arbeitsmodus unterschieden werden kann, wobei diese Arbeitselemente jeweils in Abhängigkeit des Modus unterschiedliche Positionen, Stellungen oder dergl. einnehmen können.

Bei den Überwachungselementen des Füllstands kann es sich um jegliche Sensoren zur Füllstandsermittlung handeln, bspw. um Ultraschallsensoren, Radarsensoren, Drucksensoren, Schwimmerschalter oder dergl. Auch Kraftsensoren im Bereich der Befestigung des Vorratsbehälters sind vorstellbar bzw. denkbar.

Während einer Straßenfahrt bzw. im Straßenfahrmodus bleibt der Füllstand im Vorratsbehälter mit Ausnahme des Befüllvorganges in der Regel stets konstant, wobei der Vorratsbehälter hier entweder befüllt oder leer ist, wodurch im Straßenfahrmodus eine einmalige Regelung des Reifenluftdrucks ausreichend sein kann bzw. ausreichend ist. Im Arbeitsmodus, d.h. während des Ausbringvorganges des Verteilergestänges bzw. der landwirtschaftlichen Maschine verringert sich der Füllstand im Vorratsbehälter hingegen kontinuierlich, wodurch auch eine Regelung des Reifenluftdrucks kontinuierlich erfolgt, wobei diese kontinuierliche Regelung auch periodisch bzw. in definierten Zeitintervallen erfolgen kann. Eine periodische Regelung hat den Vorteil, dass jeweils eine exaktere Anpassung an den Reifenluftdruck erfolgen kann, da durch die Kompression der Luft jeweils eine gewisse Zeit in den Räder benötigt wird, bis sich ein definierter Reifenluftdruck einstellt.

Die Druckbereiche werden erfindungsgemäß in Abhängigkeit der Tragfähigkeit der jeweiligen Räder definiert.

So kann der Druckbereich für den Straßenfahrmodus so definiert sein, dass der Reifenluftdruck bzw. die Reifenluftdrücke nie einen Wert erreichen kann, welcher für eine jeweilige Geschwindigkeit und ein jeweiliges Gewicht unterhalb einer für diese Parameter erforderlichen Tragfähigkeit des bzw. der Räder liegt. Die Druckbereiche können somit in Abhängigkeit von den jeweiligen Rädern verschieden definiert sein. Dabei können die Angaben zu den Rädern bspw. von einer in einer Rechnereinheit hinterlegten Datenbank abgerufen werden, in welcher Datenbank wiederum die für das jeweilige Gewicht und die jeweilige Geschwindigkeit erforderlichen Reifenluftdrücke hinterlegt sind. Auch können in der Datenbank die jeweiligen Lastindexe und Geschwindigkeitsindexe oder dergl. hinterlegt sein. Auch können diese Daten über eine Online-Datenbank abgerufen werden, welche bspw. wiederum mit der Rechnereinheit bzw. mit dem Luftdruckregler verbunden sein kann. Auch könnte an den Rädern ein Barcode oder dergl. Erkennungssystem vorhanden sein, wodurch wiederum durch Einscannen des Barcodes oder Erkennungssystem wieder Daten in eine Rechnereinheit hinterlegt werden. Auch können die Druckbereiche manuell durch eine Bedienperson eingegeben werden.

Der erste Druckbereich kann so definiert sein, dass in diesem die Räder mit einem Reifenluftdruck von 1,5 bar bis 5 bar beaufschlagt werden können sowie dass diese im zweiten Druckbereich mit einem Reifenluftdruck von 0,5 bar bis 2 bar beaufschlagt werden. Das kann bedeuten, dass in einem Arbeitsmodus der maximale Reifenluftdruck 2 bar betragen kann, wodurch die durch die landwirtschaftliche Maschine hervorgerufenen Bodenverdichtungen weitgehend reduziert werden können. Ebenso beträgt im Straßenfahrmodus der minimale Reifenluftdruck noch 2 bar, wodurch auch hier noch eine ausreichende Fahrstabilität gewährleistet wird sowie der Reifenverschleiß auf ein Minimum reduziert wird.

In einer weiteren Ausführungsform kann vorgesehen sein, dass die jeweiligen Räder auf unterschiedliche Reifenluftdrücke geregelt werden. So könnte vorgesehen sein, das insbesondere bei einer als selbstfahrende Feldspritze ausgebildeten landwirtschaftlichen Maschine nur jeweils die zwei, eine Achse bildenden Räder mit einem Luftdruckregler versehen sind, welche vom jeweiligen Füllstand des Vorratsbehälters beeinflusst werden. Das wenigstens eine andere bzw. die zwei eine zweite Achse bildenden Räder werden bspw. aufgrund von nur geringen Gewichtsveränderungen nicht geregelt.

Auch könnte vorgesehen sein, dass die Räder in Abhängigkeit einer durch die landwirtschaftlichen Maschine befahrenen Hanglage verschieden geregelt werden, so dass bspw. die Hangabwärts gelegenen Räder einen höheren Reifenluftdruck erhalten als die Hangaufwärts gelegenen, wodurch wiederum die Fahrstabilität erhöht werden kann. Dabei kann die Hanglage bspw. auf Basis einer Gewichtsverlagerung der landwirtschaftlichen Maschine, oder mittels Neigungssensoren oder auf Basis von GPS Daten oder dergl. erfasst werden.

Eine Arbeitsweise einer erfindungsgemäßen landwirtschaftlichen Maschine könnte bspw. wie folgt sein, wobei die Reihenfolge der einzelnen Prozessschritte gegenüber der nachfolgenden Reihenfolge variieren kann.
- Arbeitsbeginn der landwirtschaftlichen Maschine:
   Zunächst befindet sich die landwirtschaftliche Maschine im Straßenfahrmodus, d.h. es ist der erste Druckbereich aktiv, wobei hier das Verteilergestänge geklappt ist und/oder die Lenkung gesperrt ist sowie der Vorratsbehälter in der Regel leer ist, d.h. das Überwachungsmittel erfasst ein Signal "Füllstand = leer". Der Reifenluftdruck beträgt hierbei bspw. 2 bar, was wiederum einem Minimum des im Straßenfahrmodus möglichen Reifenluftdrucks entsprechen kann.
- Befüllung des Vorratsbehälters:
   Der Vorratsbehälter wird befüllt, wobei auf Basis des mittels des Überwachungsmittels ermittelten Füllstandes des Vorratsbehälters sowie in Abhängigkeit des jeweiligen Rads der Reifenluftdrucks jeweils angepasst wird, um somit einen optimalen Reifenluftdruck im Hinblick auf die Fahrstabilität, den Reifenverschleiß, den Kraftstoffverbrauch oder dergl. zu erreichen, wobei dieser Reifenluftdruck, sobald der Vorratsbehälter voll ist bspw. 2,8 bar, beträgt, was wiederum einem Minimum des im Straßenfahrmodus möglichen Reifenluftdrucks entsprechen kann. Somit könnte der erste Druckbereich Reifenluftdrücke von 2,0 Bar bis 2,8 bar beinhalten.
- Fahrt auf die zu bearbeitende Ackerfläche:
   Da hierbei der Füllstand des Vorratsbehälters konstant bleibt, findet keine Regelung des Reifenluftdrucks statt, wodurch die Fahrstabilität der landwirtschaftlichen Maschine nicht negativ beeinflusst wird. Was zudem durch den auf das jeweils an der landwirtschaftlichen Maschinen vorhandenen Rades angepassten Reifenluftdruck noch weiter verbessert wird.
- Wechsel aus dem Straßenfahrmodus in den Arbeitsmodus:
   Es erfolgt nun eine Umschaltung aus einem Straßenfahrmodus in einen Feldmodus und/oder ein Ausklappen des Verteilergestänges aus einer Transportposition in eine Arbeitsposition und/oder eine Aktivschaltung der Lenkung der landwirtschaftlichen Maschine oder eine Verstellung eines anderen definierten Arbeitselementes oder Parameters, mittels welchem zwischen einem Arbeitsmodus und einem Straßenfahrmodus unterschieden werden kann. Durch diese Umschaltung erfolgt zudem eine Umschaltung auf den zweiten Druckbereich, in dem jeweils ein Reifenluftdruck für eine gewünschte Bodenschonung mittels des Luftdruckreglers eingestellt wird. Dieser Reifenluftdruck beträgt bspw. 2,0 Bar, was wiederum einem Maximum des im Arbeitsmodus möglichen Reifenluftdrucks entsprechen kann, um somit zum einen eine Bodenverdichtung soweit wie möglich zu minimieren, jedoch auch noch eine auseichende Tragfähigkeit der Räder zu gewährleisten.
- Arbeitsprozess der landwirtschaftlichen Maschine: Mittels der Feldspritze erfolgt eine Verteilung von Pflanzenschutzmittel, wobei hierbei mittels des Luftdruckreglers eine kontinuierliche Anpassung des Reifenluftdrucks in Abhängigkeit des Füllstands des Vorratsbehälters erfolgen kann. Auch könnte eine nicht kontinuierliche Anpassung des Reifenluftdrucks erfolgen, wobei hierbei jedoch bei Unterschreitung eines definierten Füllgrads des Vorratsbehälters der Reifenluftdruck wiederum auf einen definierten Reifenluftdruck geregelt wird.
- Beendigung des Arbeitsmodus:
   Der Vorratsbehälter der landwirtschaftlichen Maschine ist nach Beendigung der Verteilung der Pflanzenschutzflüssigkeit leer. Durch die Reifendruckregelung ist in den Rädern ein Reifenluftdruck von bspw. 1,2 bar vorhanden, was wiederum einem Minimum des im Arbeitsmodus möglichen Reifenluftdrucks entsprechen kann. Sobald der Vorratsbehälter leer ist, erfolgt wiederum eine Umschaltung auf einen Straßenfahrmodus durch bspw. ein Einklappen des Verteilergestänges und/oder eine Sperrung der Lenkung und/oder dergl., wodurch wiederum ein Wechsel aus einem zweiten Druckbereich in einen ersten Druckbereich erfolgt, in welchem nun wiederum eine Anpassung des Reifenluftdrucks an einen für eine Fahrt mit leeren Vorratsbehälter erforderlichen Wert erfolgt, wobei dieser Reifenluftdruck bspw. 2,0 bar beträgt.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Hierbei zeigen:
- Fig. 1: eine Seitenansicht einer als gezogene Feldspritze ausgeführte landwirtschaftliche Maschine mit einem sich in einer Transportposition befindenden Verteilergestänge.
- Fig. 2: eine Seitenansicht einer als gezogene Feldspritze ausgeführte landwirtschaftliche Maschine mit einem sich in einer Arbeitsposition befindenden Verteilergestänge.
- Fig. 3: eine Seitenansicht einer als Selbstfahrende Feldspritze ausgeführte landwirtschaftliche Maschine mit einem sich in einer Arbeitsposition befindenden Verteilergestänge.
- Fig. 4: eine Ausführungsform zur Durchführung eines Verfahrens zur Reifendruckregelung bei einer landwirtschaftlichen Maschine.

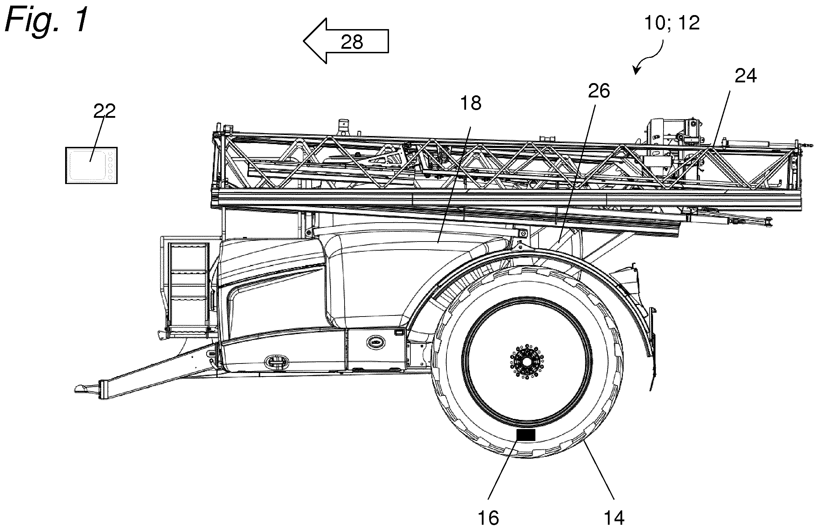

Für gleiche oder gleich wirkende Elemente der Erfindung werden in den Figuren 1 bis 4 jeweils identische Bezugszeichen verwendet. Ferner werden der besseren Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäßen landwirtschaftlichen Maschine mit Reifendruckregelanlage und das Verfahren zur Reifendruckregelung einer landwirtschaftlichen Maschine ausgestaltet sein können und stellen keine abschließende Begrenzung dar.

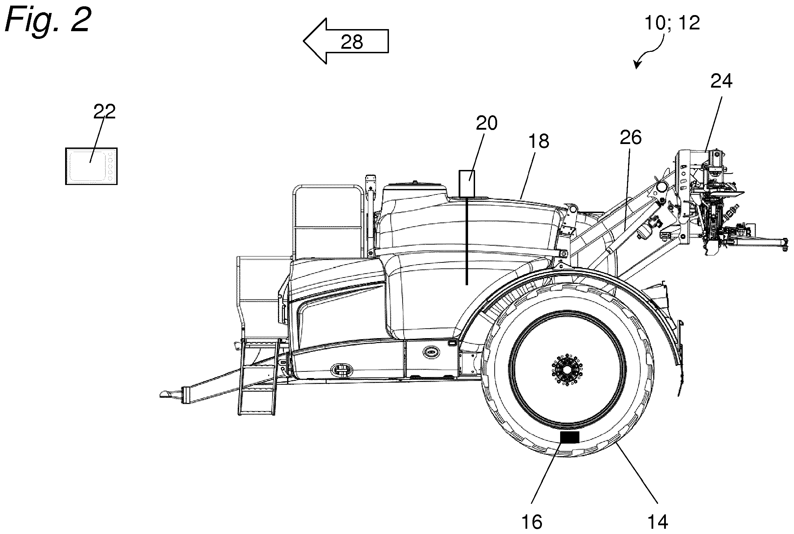

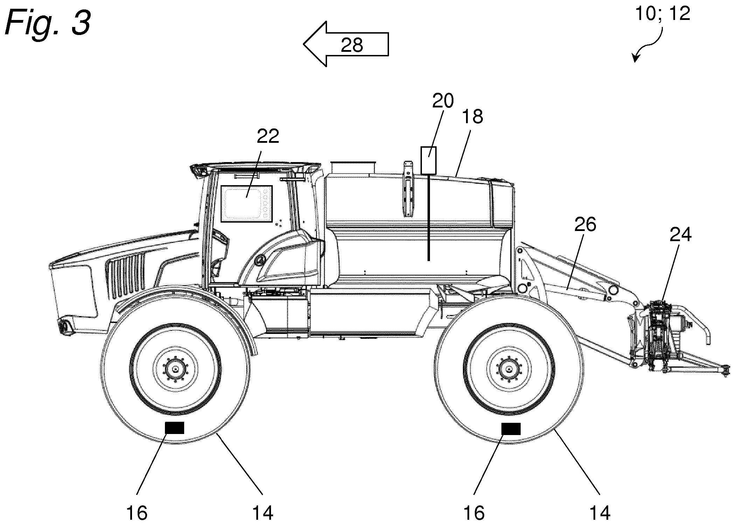

Die Seitenansichten der Figuren 1 bis 3 zeigen jeweils landwirtschaftliche Maschinen 10 in Form von Feldspritzen 12, wobei die Figuren 1 und 2 jeweils eine mittels eines hier nicht dargestellten Zugfahrzeuges gezogene Feldspritze 12 und die Fig. 3 eine als Selbstfahrende Feldspritze 12 ausgeführte landwirtschaftliche Maschine zeigen. Die gezogenen Feldspritzen 12 der Figuren 1 und 2 weisen hierbei jeweils wenigstens zwei Räder 14 sowie die Selbstfahrende Feldspritze 12 der Fig. 3 jeweils wenigstens drei, insbesondere jedoch vier Räder 14 auf, wobei aufgrund der Seitenansicht hier jeweils nur ein Rad bzw. zwei Räder 14 ersichtlich sind. Mit den hier gezeigten Feldspritzen 12 werden jeweils verschiedenste Pflanzenschutzmittel auf einer Ackerfläche verteilt. Zur Variation des in den Rädern 14 vorhandenen Reifenluftdrucks ist diesen wenigstens ein gemeinsamer oder jeweils zwei eine Achse bildenden Räder 14 oder jedem Rad 14, ein Luftdruckregler 16 zugeordnet, wobei zumindest einzelne Räder 14 jeweils lenkbar sein können. Zum Mitführen und Bereitstellen des jeweiligen Pflanzenschutzmittels bzw. des jeweiligen Verteilguts besitzen die Feldspritzen 12 zusätzlich wenigstens einen Vorratsbehälter 18, wobei wiederum der Füllstand in diesem mittels wenigstens einem Überwachungselements 20 ermittelt bzw. erfasst wird. Des Weiteren besitzt die landwirtschaftliche Maschine wenigstens eine Rechnereinheit 22, mit der jeweils der Luftdruckregler 16 sowie die Komponenten der Maschine angesteuert sowie die mittels des wenigstens einem Überwachungselements 20 erfassten Daten verarbeitet werden.

Zur Verteilung des jeweiligen Pflanzenschutzmittels ist an der Feldspritze 12 ein Spritz- bzw. Verteilergestänge 24 angebracht, welches zwischen einer ausgeklappten Arbeitsposition (vergl. Fig. 2 und Fig. 3) und einer eingeklappten Transportposition (vergl. Fig. 1) verschwenkbar, sowie mittels Stellgliedern 26 jeweils in deren Abstand zu einer Bodenoberfläche veränderbar ist (vergl. Fig. 2 und Fig. 3), wobei sich dieses zudem in einer Arbeitsposition quer zu einer Fahrrichtung 28 der Feldspritze 12 erstreckt. Am Verteilergestänge 24 sind in Abständen von bspw. 25 cm oder 50 cm zueinander jeweils Spritzdüsen angebracht, welche zur Verteilung der Pflanzenschutzflüssigkeit jeweils einen zum Pflanzenbestand hingerichteten Sprühkegel erzeugen.

Die Ansteuerung des Luftdruckreglers 16 erfolgt jeweils in Abhängigkeit des Fahrmodus der Feldspritze 12, wobei hierzu ein Straßenfahrmodus sowie ein Arbeitsmodus vorgesehen sind. So kann der Straßenfahrmodus bspw. durch ein eingeklapptes Verteilergestänge 24 (vergl. Fig. 1) definiert sein. Auch könnte eine starr gestellte Lenkung zur Definition des Straßenfahrmodus verwendet werden. Auch eine Fahrgeschwindigkeit der landwirtschaftlichen Maschine könnte den Straßenfahrmodus definierten, so dass bei einer definierten Geschwindigkeit, welche bspw. größer 20 km/h ist, der Straßenfahrmodus aktiviert wird. Auch könnte der Straßenfahrmodus durch eine Bedienperson manuell definiert bzw. vorgewählt werden.

Umgekehrt wie im Straßenfahrmodus kann der Arbeitsmodus unter anderem durch ein ausgeklapptes Verteilergestänge 24 (vergl. Fig. 2 und Fig. 3) und/oder durch eine aktive Lenkung definiert sein. Auch kann hier wiederum die Geschwindigkeit den Arbeitsmodus definieren, wobei diese hier kleiner ist als im Straßenfahrmodus und bspw. kleiner oder gleich 20 km/h ist. Auch kann der Arbeitsmodus wiederum manuell durch eine Bedienperson entsprechend vorgewählt werden.

Somit können generell die verschiedensten Arbeitselemente oder Parameter der landwirtschaftlichen Maschine 10 bzw. der Feldspritze verwendet werden, mittels denen zwischen einem Straßenfahrmodus und einem Arbeitsmodus unterschieden werden kann, wobei diese Arbeitselemente jeweils in Abhängigkeit des Modus unterschiedliche Positionen, Stellungen oder dergl. einnehmen können.

In einem Straßenfahrmodus ist hierbei ein erster Druckbereich sowie in einem Arbeitsmodus ein zweiter Druckbereich aktiv. Somit können die jeweiligen Druckbereiche der Räder 14 jeweils auf die jeweiligen Erfordernisse sowie die Regelung des Reifenluftdrucks jeweils an die aktuellen Fahreigenschaften angepasst werden. So kann vorgesehen sein, dass in einem Straßenfahrmodus bspw. nur eine einmalige Regelung erfolgt, so dass während der Straßenfahrt keine weiteren Änderungen mehr am Reifenluftdruck vorgenommen werden, sowie dass in einem Arbeitsmodus, in welchem sich in der Regel der Füllstand des Vorratsbehälters 18 kontinuierlich verändert, auch der Reifenluftdruck kontinuierlich verändert wird.

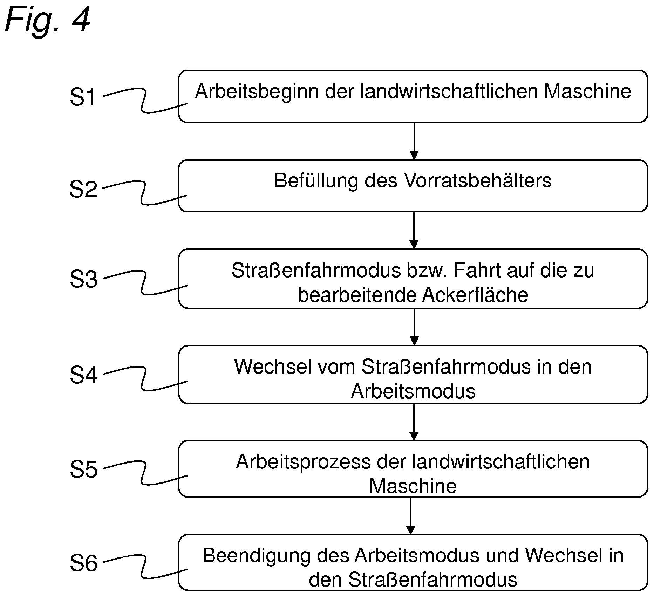

Das Ablaufdiagramm der Fig. 4 verdeutlicht einzelne Schritte eines beispielhaft zu verstehenden Verfahrens zur Reifendruckregelung einer landwirtschaftlichen Maschine.

Ein erster Schritt S1 sieht einen Arbeitsbeginn der landwirtschaftlichen Maschine 10 vor; hierbei befindet sich die landwirtschaftliche Maschine 10 im Straßenfahrmodus, d.h. es ist der erste Druckbereich aktiv, wobei hier das Verteilergestänge 24 geklappt ist und/oder die Lenkung gesperrt ist sowie der Vorratsbehälter 18 in der Regel leer ist, d.h. das Überwachungsmittel 20 erfasst ein Signal "Füllstand = leer". Der Reifenluftdruck beträgt hierbei bspw. etwa zwei bar, was wiederum einem Minimum des im Straßenfahrmodus möglichen oder sinnvollen Reifenluftdrucks entsprechen kann.

In einem zweiten Schritt S2 erfolgt das Befüllen des Vorratsbehälters 18: der Vorratsbehälter 18 wird befüllt, wobei auf Basis des mittels des Überwachungsmittels 20 ermittelten Füllstandes des Vorratsbehälters 18 sowie in Abhängigkeit des jeweiligen Rads 14 der Reifenluftdrucks jeweils angepasst wird, um somit einen optimalen Reifenluftdruck im Hinblick auf die Fahrstabilität, den Reifenverschleiß, den Kraftstoffverbrauch oder weiterer Parameter zu erreichen. Dieser Reifenluftdruck beträgt, sobald der Vorratsbehälter 18 voll ist, bspw. etwa 2,8 bar, was wiederum einem Minimum des im Straßenfahrmodus möglichen Reifenluftdrucks entsprechen kann. Somit könnte der erste Druckbereich Reifenluftdrücke von etwa 2,0 bar bis etwa 2,8 bar umfassen.

In einem nächsten oder dritten Schritt S3 erfolgt die Fahrt auf die zu bearbeitende Ackerfläche: hierbei befindet sich die landwirtschaftliche Maschine 10 zunächst weiterhin im Straßenmodus. Da während dieser Fahrt der Füllstand des Vorratsbehälters 18 zumindest weitgehend konstant bleibt, findet keine Regelung oder Veränderung des Reifenluftdrucks statt, wodurch die Fahrstabilität der landwirtschaftlichen Maschine 10 nicht negativ beeinflusst wird. Die Fahrstabilität wird zudem dadurch noch weiter verbessert oder aufrechterhalten, dass der Reifenluftdruck jedes Rades der landwirtschaftlichen Maschine 10 sinnvoll angepasst werden kann.

In einem nächsten oder vierten Schritt S4 erfolgt bei Erreichen der Ackerfläche ein Wechsel aus dem Straßenfahrmodus in den Arbeitsmodus: es erfolgt nun eine Umschaltung von einem Straßenfahrmodus in einen Feldmodus und/oder ein Ausklappen des Verteilergestänges 24 aus einer Transportposition in eine Arbeitsposition und/oder eine Aktivschaltung der Lenkung der landwirtschaftlichen Maschine 10 oder eine Verstellung eines anderen definierten Arbeitselementes oder Parameters, mittels welchem zwischen einem Arbeitsmodus und einem Straßenfahrmodus unterschieden werden kann. Durch diese Umschaltung erfolgt zudem eine Umschaltung auf den zweiten Druckbereich, in dem jeweils ein Reifenluftdruck für eine gewünschte Bodenschonung mittels des Luftdruckreglers 16 eingestellt wird. Dieser Reifenluftdruck beträgt bspw. 2,0 bar, was wiederum einem Maximum des im Arbeitsmodus möglichen Reifenluftdrucks entsprechen kann, um somit zum einen eine Bodenverdichtung soweit wie möglich zu minimieren, jedoch auch noch eine auseichende Tragfähigkeit der Räder 14 zu gewährleisten.

In einem nächsten oder fünften Schritt S5 erfolgt der Arbeitsprozess der landwirtschaftlichen Maschine 10: mittels der Feldspritze erfolgt eine Verteilung von Pflanzenschutzmittel auf der Ackerfläche, wobei hierbei mittels des Luftdruckreglers 16 eine kontinuierliche Anpassung des Reifenluftdrucks in Abhängigkeit des Füllstands des Vorratsbehälters 18 erfolgen kann. Auch könnte eine nicht kontinuierliche Anpassung des Reifenluftdrucks erfolgen, wobei hierbei jedoch bei Unterschreitung eines definierten Füllgrads des Vorratsbehälters 18 der Reifenluftdruck wiederum auf einen definierten Reifenluftdruck geregelt wird.

In einem letzten Schritt S6 erfolgt die Beendigung des Arbeitsmodus und ein Wechsel in den Straßenmodus: der Vorratsbehälter 18 der landwirtschaftlichen Maschine 10 ist nach Beendigung der Verteilung der Pflanzenschutzflüssigkeit leer. Durch die Reifendruckregelung ist in den Rädern ein Reifenluftdruck von bspw. 1,2 bar vorhanden, was wiederum einem Minimum des im Arbeitsmodus möglichen Reifenluftdrucks entsprechen kann. Sobald der Vorratsbehälter 18 leer ist, erfolgt wiederum eine Umschaltung auf einen Straßenfahrmodus durch bspw. ein Einklappen des Verteilergestänges und/oder eine Sperrung der Lenkung und/oder dergl., wodurch wiederum ein Wechsel aus einem zweiten Druckbereich in einen ersten Druckbereich erfolgt, in welchem nun wiederum eine Anpassung des Reifenluftdrucks an einen für eine Fahrt mit leeren Vorratsbehälter 18 erforderlichen Wert erfolgt, wobei dieser Reifenluftdruck bspw. 2,0 bar beträgt.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Landwirtschaftliche Maschine
- 12: Feldspritze
- 14: Rad
- 16: Luftdruckregler
- 18: Vorratsbehälter
- 20: Überwachungselement
- 22: Rechnereinheit
- 24: Verteilergestänge
- 26: Stellglied
- 28: Fahrtrichtung

- S1: erster Verfahrensschritt
- S2: zweiter Verfahrensschritt
- S3: dritter Verfahrensschritt
- S4: vierter Verfahrensschritt
- S5: fünfter Verfahrensschritt
- S6: sechster Verfahrensschritt

## Patentansprüche

1. Landwirtschaftliche Maschine (10) in Form einer mittels eines Zugfahrzeuges gezogenen Feldspritze (12) oder einer selbstfahrenden Feldspritze (12) mit einer Reifendruckregelanlage umfassend:
• wenigstens zwei, drei oder mehr mit einem Reifenluftdruck beaufschlagte Räder (14),
• wenigstens einen Luftdruckregler (16) zur Variation des in den Rädern (14) vorhandenen Reifenluftdrucks,
• wenigstens einen Vorratsbehälter (18) zum Mitführen und Bereitstellen des zu verteilenden Pflanzenschutzmittels,
• wenigstens ein Überwachungselement (20) zur Ermittlung und Erfassung des Füllstands des Vorratsbehälters (18),
• wenigstens ein zwischen einer ausgeklappten Arbeitsposition und einer eingeklappten Transportposition schwenkbares Verteilergestänge (24),
• wenigstens eine Rechnereinheit (22) zur Ansteuerung des wenigstens einen Luftdruckreglers (16) und zur Verarbeitung der mittels des wenigstens einen Überwachungselements (20) erfassten Daten zum Füllstand des Vorratsbehälters (18),
**dadurch gekennzeichnet, dass** die Ansteuerung des Luftdruckreglers (16) in Abhängigkeit des Fahrmodus der Feldspritze (12) erfolgt, wobei in einem Straßenfahrmodus ein erster Druckbereich aktiv ist und wobei in einem Arbeitsmodus ein zweiter Druckbereich aktiv ist, wobei der Arbeitsmodus durch ein ausgeklapptes Verteilergestänge (24) oder durch eine aktiv gestellte Lenkung oder durch eine Fahrgeschwindigkeit, welche unterhalb einer definierten Fahrgeschwindigkeit liegt, definiert ist oder durch eine Bedienperson manuell auswählbar ist,
wobei der erste Druckbereich und der zweite Druckbereich in Abhängigkeit der Tragfähigkeit der Räder (14) definiert sind,
wobei der erste Druckbereich so definiert ist, dass der Reifenluftdruck keinen Wert einnehmen kann, welcher für eine jeweilige Geschwindigkeit und ein jeweiliges Gewicht unterhalb einer hierfür erforderlichen Tragfähigkeit der Räder (14) liegt.

2. Landwirtschaftliche Maschine nach Anspruch 1, **dadurch gekennzeichnet, dass** in einem Straßenfahrmodus eine einmalige Regelung des Reifenluftdrucks erfolgt sowie dass in einem Arbeitsmodus auf Basis eines sich verändernden Füllstands des Vorratsbehälters (18) eine kontinuierliche Veränderung des Reifenluftdrucks erfolgt.

3. Landwirtschaftliche Maschine nach Anspruch 1 oder 2, **dadurch gekennzeichnet, dass** der Straßenfahrmodus durch ein eingeklapptes Verteilergestänge (24) und/oder durch eine starr gestellte Lenkung und/oder durch eine Überschreitung einer definierten Fahrgeschwindigkeit definiert ist oder durch eine Bedienperson manuell auswählbar ist.

4. Landwirtschaftliche Maschine nach einem der vorhergehenden Ansprüche, **dadurch gekennzeichnet, dass** im ersten Druckbereich die Räder (14) mit einem Reifenluftdruck von 1,5 Bar bis 5 Bar beaufschlagbar sind und in einem zweiten Druckbereich die Räder (14) mit einem Reifenluftdruck von 0,5 Bar bis 2 Bar beaufschlagbar sind.

5. Landwirtschaftliche Maschine nach einem der vorhergehenden Ansprüche, **dadurch gekennzeichnet, dass** die wenigstens zwei Räder (14) unterschiedliche Reifenluftdrücke aufweisen.

6. Landwirtschaftliche Maschine nach Anspruch 5, **dadurch gekennzeichnet, dass** die Reifenluftdrücke der wenigstens zwei Räder (14) auf Basis einer mittels der Feldspritze (12) befahrenen Hanglage geregelt wird, wobei die Hanglage auf Basis einer Gewichtsverlagerung der Feldspritze (12) und/oder mittels eines Neigungssensors ermittelt wird.

7. Verfahren zur Reifendruckregelung bei einer landwirtschaftlichen Maschine (10) in Form einer mit einer Zugmaschine gezogenen Feldspritze (12) oder einer selbstfahrenden Feldspritze (12), die Maschine bzw. die Feldspritze (12) umfassend:
• wenigstens zwei, drei oder mehr mit einem Reifenluftdruck beaufschlagte Räder (14),
• wenigstens einen Luftdruckregler (16) zur Variation des in den Rädern (14) vorhandenen Reifenluftdrucks,
• wenigstens einen Vorratsbehälter (18) zum Mitführen und Bereitstellen des zu verteilenden Pflanzenschutzmittels,
• wenigstens ein Überwachungselement (20) zur Ermittlung und Erfassung des Füllstands des Vorratsbehälters (18),
• wenigstens ein zwischen einer ausgeklappten Arbeitsposition und einer eingeklappten Transportposition schwenkbares Verteilergestänge (24),
• wenigstens eine Rechnereinheit (22) zur Ansteuerung des wenigstens einen Luftdruckreglers (16) und zur Verarbeitung der mittels des wenigstens einen Überwachungselements (20) erfassten Daten zum Füllstand des Vorratsbehälters (18),
**dadurch gekennzeichnet, dass** der Luftdruckregler (16) in Abhängigkeit von einem Fahrmodus der Feldspritze (12) angesteuert wird, wobei in einem Straßenfahrmodus ein erster Druckbereich aktiviert wird, und wobei in einem Arbeitsmodus ein zweiter Druckbereich aktiviert wird, wobei der Arbeitsmodus durch eine Fahrgeschwindigkeit, welche unterhalb einer definierten Fahrgeschwindigkeit liegt definiert wird oder wobei der Arbeitsmodus durch ein Ausklappen des Verteilergestänges (24) aus der Transportposition in die Arbeitsposition oder durch eine Aktivschaltung der Lenkung der landwirtschaftlichen Maschine (10) oder durch eine manuelle Umschaltung von einem Straßenfahrmodus in einen Feldmodus definiert wird, wobei
wobei der erste Druckbereich und der zweite Druckbereich in Abhängigkeit der Tragfähigkeit der Räder (14) definiert wird,
wobei der erste Druckbereich so definiert wird, dass der Reifenluftdruck keinen Wert einnehmen kann, welcher für eine jeweilige Geschwindigkeit und ein jeweiliges Gewicht unterhalb einer hierfür erforderlichen Tragfähigkeit der Räder (14) liegt.

8. Verfahren nach Anspruch 7, **dadurch gekennzeichnet, dass** in einem Straßenfahrmodus eine einmalige Regelung des Reifenluftdrucks erfolgt, sowie dass in einem Arbeitsmodus auf Basis eines sich verändernden Füllstands des Vorratsbehälters (18) eine kontinuierliche Veränderung des Reifenluftdrucks erfolgt.

## Claims

1. An agricultural machine (10) in the form of a field sprayer (12) towed by a towing vehicle or in the form of a self-propelled field sprayer (12) with a tyre pressure regulation system, the agricultural machine (10) comprising:
• at least two, three, or more wheels (14) pressurised with a tyre air pressure,
• at least one air pressure regulator (16) used to vary the tyre air pressure existing in the wheels (14),
• at least one storage tank (18) used to carry along and supply the plant protection product to be distributed,
• at least one monitoring element (20) used to determine and detect the fill level of the storage tank (18),
• at least one distributor boom (24) that is swivelable between a folded-out work position and a folded-in transport position,
• at least one computer unit (22) used to actuate the at least one air pressure regulator (16) and to process the data on the fill level of the storage tank (18) detected by means of the at least one monitoring element (20),
**characterised in that** the actuation of the air pressure regulator (16) is carried out depending on the drive mode of the field sprayer (12), wherein a first pressure range is active in a road drive mode, and wherein a second pressure range is active in a work mode, wherein the work mode is defined by a folded-out distributor boom (24) or by a steering set to active or by a driving speed that is below a defined driving speed, or is manually selectable by an operator,
wherein the first pressure range and the second pressure range are defined depending on the load capacity of the wheels (14),
wherein the first pressure range is defined such that the tyre air pressure cannot assume a value that is below a load capacity of the wheels (14) required for a particular speed and a particular weight.

2. The agricultural machine according to claim 1, **characterised in that** in a road drive mode, a one-time regulation of the tyre air pressure is carried out, and **in that** in a work mode, a continuous change of the tyre air pressure is carried out based on a changing fill level of the storage tank (18).

3. The agricultural machine according to claim 1 or 2, **characterised in that** the road drive mode is defined by a folded-in distributor boom (24) and/or by a steering set to rigid and/or by an exceeding of a defined driving speed, or is manually selectable by an operator.

4. The agricultural machine according to one of the previous claims, **characterised in that** the wheels (14) are pressurisable with a tyre air pressure of 1.5 bar to 5 bar in the first pressure range, and **in that** the wheels (14) are pressurisable with a tyre air pressure of 0.5 bar to 2 bar in a second pressure range.

5. The agricultural machine according to one of the previous claims, **characterised in that** the at least two wheels (14) have different tyre air pressures.

6. The agricultural machine according to claim 5, **characterised in that** the tyre air pressures of the at least two wheels (14) are regulated based on a slope on which the field sprayer (12) is driving, wherein the slope is determined based on a shift of weight of the field sprayer (12) and/or by means of a tilt sensor.

7. A method for tyre pressure regulation in an agricultural machine (10) in the form of a field sprayer (12) towed by a towing machine or in the form of a self-propelled field sprayer (12), the machine or the field sprayer (12), as applicable, comprising:
• at least two, three, or more wheels (14) pressurised with a tyre air pressure,
• at least one air pressure regulator (16) for the variation of the tyre air pressure existing in the wheels (14),
• at least one storage tank (18) used to carry along and supply the plant protection product to be distributed,
• at least one monitoring element (20) used to determine and detect the fill level of the storage tank (18),
• at least one distributor boom (24) that is swivelable between a folded-out work position and a folded-in transport position,
• at least one computer unit (22) used to actuate the at least one air pressure regulator (16) and to process the data on the fill level of the storage tank (18) detected by means of the at least one monitoring element (20),
**characterised in that** the air pressure regulator (16) is actuated depending on a drive mode of the field sprayer (12), wherein a first pressure range is activated in a road drive mode, and wherein a second pressure range is activated in a work mode, wherein the work mode is defined by a driving speed that is below a defined driving speed, or wherein the work mode is defined by a distributor boom (24) being folded out from the transport position into the work position or by an activation of the steering of the agricultural machine (10) or by a manual switching from a road drive mode into a field mode,
wherein the first pressure range and the second pressure range are defined depending on the load capacity of the wheels (14),
wherein the first pressure range is defined such that the tyre air pressure cannot assume a value that is below a load capacity of the wheels (14) required for a particular speed and a particular weight.

8. The method according to claim 7, **characterised in that** in a road drive mode, a one-time regulation of the tyre air pressure is carried out, and **in that** in a work mode, a continuous change of the tyre air pressure is carried out based on a changing fill level of the storage tank (18).

## Revendications

1. Machine agricole (10) sous forme d'un pulvérisateur agricole (12) tracté par un véhicule tracteur, ou d'un pulvérisateur agricole automoteur (12), dotée d'un système de réglage de pression des pneus, comprenant :
• au moins deux, trois ou plus, roues (14) gonflées à une pression de gonflage de pneu,
• au moins un régulateur de pression d'air (16) pour faire varier la pression de gonflage des pneus présente dans les roues (14),
• au moins un réservoir (18) pour transporter et fournir le produit phytosanitaire à épandre,
• au moins un élément de contrôle (20) pour déterminer et détecter le niveau de remplissage dudit réservoir (18),
• au moins une rampe d'épandage (24) pivotant entre une position de travail déployée et une position de transport repliée,
• au moins une unité de calcul (22) pour commander ledit au moins un régulateur de pression d'air (16) et pour traiter les données relatives au niveau de remplissage du réservoir (18), saisies au moyen dudit au moins un élément de contrôle (20),
**caractérisée en ce que** la commande du régulateur de pression d'air (16) s'effectue en fonction du mode de marche du pulvérisateur agricole (12), une première plage de pression étant active en mode de marche sur route et une deuxième plage de pression étant active en mode de travail, ledit mode de travail étant défini par une rampe d'épandage (24) déployée ou par une direction mise en position active ou par une vitesse de marche qui est inférieure à une vitesse de marche définie, ou pouvant être sélectionnée manuellement par un opérateur,
la première plage de pression et la deuxième plage de pression étant définies en fonction de la capacité portante des roues (14),
la première plage de pression étant définie de telle sorte que la pression de gonflage des pneus ne peut pas prendre une valeur qui, pour une vitesse donnée ou pour un poids donné, soit inférieure à une capacité portante des roues (14) requise à cet effet.

2. Machine agricole selon la revendication 1, **caractérisée en ce que**, dans un mode de marche sur route, un réglage de la pression de gonflage des pneus ne s'effectue qu'une seule fois, et **en ce que**, dans un mode de travail, une modification de la pression de gonflage des pneus s'effectue en continu sur la base d'un niveau de remplissage variable du réservoir (18).

3. Machine agricole selon la revendication 1 ou 2, **caractérisée en ce que** le mode de marche sur route est défini par une rampe d'épandage (24) déployée et/ou par une direction mise en position fixe et/ou par un dépassement d'une vitesse de marche définie, ou pouvant être sélectionné manuellement par un opérateur.

4. Machine agricole selon l'une quelconque des revendications précédentes, **caractérisée en ce que**, sur la première plage de pression, les roues (14) peuvent être gonflées à une pression de gonflage des pneus de 1,5 à 5 bars et, sur une deuxième plage de pression, les roues (14) peuvent être gonflées à une pression de gonflage des pneus de 0,5 à 2 bars.

5. Machine agricole selon l'une quelconque des revendications précédentes, **caractérisée en ce que** lesdites au moins deux roues (14) présentent des pressions de gonflage des pneus différentes.

6. Machine agricole selon la revendication 5, **caractérisée en ce que** les pressions de gonflage des pneus desdites au moins deux roues (14) sont réglées sur la base d'une position en pente parcourue au moyen du pulvérisateur agricole (12), ladite position en pente étant déterminée sur la base d'un déplacement du poids du pulvérisateur agricole (12) et/ou au moyen d'un capteur d'inclinaison.

7. Procédé de réglage de pression de gonflage de pneus dans une machine agricole (10) sous forme d'un pulvérisateur agricole (12) tracté par un tracteur routier, ou d'un pulvérisateur agricole (12) automoteur, la machine voire le pulvérisateur agricole (12) comprenant :
• au moins deux, trois ou plus, roues (14) gonflées à la pression de gonflage d'un pneu,
• au moins un régulateur de pression d'air (16) pour faire varier la pression de gonflage de pneu actuelle des roues (14),
• au moins un réservoir (18) pour transporter et fournir le produit phytosanitaire à épandre,
• au moins un élément de contrôle (20) pour déterminer et détecter le niveau de remplissage dudit réservoir (18),
• au moins une rampe d'épandage (24) pouvant pivoter entre une position de travail déployée et une position de transport repliée,
• au moins une unité de calcul (22) pour commander ledit au moins un régulateur de pression d'air (16) et pour traiter les données relatives au niveau de remplissage du réservoir (18), saisies au moyen dudit au moins un élément de contrôle (20),
**caractérisé en ce que** le régulateur de pression d'air (16) est commandé en fonction d'un mode de marche du pulvérisateur agricole (12), une première plage de pression étant activée dans un mode de marche sur route, et une deuxième plage de pression étant activée dans un mode de travail, ledit mode de travail étant défini par une vitesse de marche qui est inférieure à une vitesse de marche définie, ou le mode de travail étant défini par un déploiement de la rampe d'épandage (24) qui la fait passer de la position de transport à la position de travail, ou par une mise en mode actif de la direction de la machine agricole (10) ou par un passage manuel d'un mode de marche sur route à un mode de marche en champ,
la première plage de pression et la deuxième plage de pression étant définies en fonction de la capacité portante des roues (14),
la première plage de pression étant définie de telle sorte que la pression de gonflage des pneus ne peut pas prendre une valeur qui, pour une vitesse donnée ou pour un poids donné, soit inférieure à une capacité portante des roues (14) requise à cet effet.

8. Machine agricole selon la revendication 7, **caractérisée en ce que**, dans un mode de marche sur route, un réglage de la pression de gonflage des pneus ne s'effectue qu'une seule fois, et **en ce que**, dans un mode de travail, une modification de la pression de gonflage des pneus s'effectue en continu sur la base d'un niveau de remplissage variable du réservoir (18).
